(19) Europäisches Patentamt
European Patent Office
Office européen des brevets

(11) **EP 3 550 047 A1**

(12) **EUROPEAN PATENT APPLICATION**
published in accordance with Art. 153(4) EPC

(43) Date of publication:
**09.10.2019 Bulletin 2019/41**

(21) Application number: **16923381.4**

(22) Date of filing: **05.12.2016**

(51) Int Cl.:
*C22C 38/00* (2006.01)    *C22C 38/60* (2006.01)
*C21D 9/46* (2006.01)

(86) International application number:
**PCT/JP2016/086060**

(87) International publication number:
**WO 2018/105003 (14.06.2018 Gazette 2018/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nippon Steel Corporation Tokyo 100-8071 (JP)**

(72) Inventors:
• **SANO, Kohichi Tokyo 100-8071 (JP)**
• **OKAMOTO, Riki Tokyo 100-8071 (JP)**

(74) Representative: **Zimmermann & Partner Patentanwälte mbB Postfach 330 920 80069 München (DE)**

(54) **HIGH STRENGTH STEEL SHEET**

(57)    A high-strength steel sheet has a chemical composition consisting of, in mass percent, C: 0.10 to 0.24%, Mn: 3.50 to 12.00%, Si: 0.005 to 5.00%, Al: 0.005 to 5.00%, P: 0.15% or less, S: 0.030% or less, N: 0.020% or less, O: 0.010% or less, Cr: 0 to 5.00%, Mo: 0 to 5.00%, Ni: 0 to 5.00%, Cu: 0 to 5.00%, Nb: 0 to 0.50%, Ti: 0 to 0.50%, W: 0 to 0.50%, B: 0 to 0.010%, Ca: 0 to 0.05%, Mg: 0 to 0.05%, Zr: 0 to 0.05%, REM: 0 to 0.05%, Sb: 0 to 0.50%, Sn: 0 to 0.50%, As: 0 to 0.05%, and V: 0 to 2.0%, with the balance: Fe and impurities, and a steel micro-structure at a 1/4 sheet-thickness position includes, in area percent, retained austenite: 10.0 to 55.0%, high temperature tempered martensite: 30.0 to 75.0%, and low temperature tempered martensite: 15.0 to 60.0%, with the balance including fresh martensite: 0 to 10.0%, pearlite: 0 to 5.0%, and bainite: 0 to 5.0%.

EP 3 550 047 A1

**Description**

TECHNICAL FIELD

The present invention relates to a high-strength steel sheet, particularly to a high-strength steel sheet excellent in formability.

BACKGROUND ART

To ensure both safety and weight reduction of a body, components, and the like of an automobile, attempts have been made to improve strength of steel sheets. In general, as a steel sheet is strengthened, its uniform elongation, local elongation, and hole-expansion properties deteriorate, which degrades its formability. Accordingly, when high-strength steel sheets are to be used as members for an automobile, a proper balance between strengths (tensile strength, yield stress) and formability is needed.

In regard to a demand for the uniform elongation, what is called a TRIP steel sheet, for which transformation induced plasticity of retained austenite is utilized has been proposed (e.g., see Patent Documents 1 and 2). In addition, Patent Documents 3 and 4 propose that steel micro-structure is made to mainly include bainite and tempered martensite to enhance hole-expansion properties and a local elongation of a TRIP steel sheet.

Moreover, as a steel sheet including more retained austenite than a TRIP steel and having a high ductility higher than that of a TRIP steel, for example, Non Patent Document 1 proposes a steel to which more than 3.0% of Mn is added.

Patent Document 5 discloses making use of tempering treatment to enhance hole-expansion properties. Martensite is hard as compared with other kinds of steel micro-structure and therefore makes a difference in hardness from steel micro-structure surrounding martensite large, degrading local elongation and hole-expansion properties. By tempering martensite at a low temperature of 500°C or less, the hole-expansion properties are enhanced.

LIST OF PRIOR ART DOCUMENTS

PATENT DOCUMENT

Patent Document 1: JP61-217529A
Patent Document 2: JP05-059429A
Patent Document 3: JP2005-330584A
Patent Document 4: JP2011-241474A
Patent Document 5: JP2012-237054A

NON PATENT DOCUMENT

Non-Patent Document 1: Takashi Furukawa, Osamu Matsumura, Journal of the Japan Society for Heat Treatment, 37(4), p.204 (1997)

SUMMARY OF INVENTION

TECHNICAL PROBLEM

Retained austenite can be obtained by concentrating C and Mn in austenite to stabilize the austenite even at room temperature. In particular, when carbide precipitation inhibiting elements such as Si and Al are added, C is concentrated in austenite in bainite transformation, which can further stabilize the austenite.

The techniques described in Patent Documents 1 and 2 are based on the above concept. When an amount of added C is large, retained austenite can be increased, and as a result, it is possible to obtain a steel sheet having a good balance between strength and uniform elongation. However, the steel sheets are those that include a hard steel micro-structure as well as soft ferrite as a main phase, which makes a large difference in hardness, tends to develop a void, and cannot enhance local elongation.

The steel sheet disclosed in Patent Document 3 includes bainite, which has low ductility, as a main phase, and a uniform elongation of the steel sheet is low as a whole, which raises a problem in that such a steel sheet cannot be used to fabricate a complex-shaped member for an automobile.

When the method disclosed in Patent Document 4 is used, it is difficult to secure a predetermined amount of retained austenite in a resultant steel sheet, which makes uniform elongation insufficient.

In addition, the steel sheet disclosed in Non Patent Document 1 is also made of a composite steel micro-structure of soft tempered martensite and hard steel micro-structure, and it is therefore difficult to enhance hole-expansion property as with the steel sheets of Patent Documents 1 and 2. In addition, the steel sheet disclosed in Non Patent Document 1 has a low yield stress because it is made of the soft tempered martensite and austenite, which raises a problem.

In the method described in Patent Document 5, it is difficult to increase the fraction of martensite that is tempered at low temperature. The method of Patent Document 5 simply includes an annealing process in which annealing is performed at $Ac_3$ point or less, a cooling process in which cooling to room temperature is performed, and a tempering process in which tempering is performed. To increase the martensite tempered at low temperature, it is necessary to increase martensite through the cooling.

However, to increase the martensite, it is necessary to destabilize austenite in the annealing process. As a result, since the austenite is destabilized, there is a problem in that EL (elongation) significantly decreases due to reduction in a fraction of retained austenite or deterioration in stabilization even when the fraction is secured.

As will be described later, a size of retained austenite in high temperature tempered martensite cannot be reduced sufficiently, and it is not possible to achieve high uniform elongation and local elongation as well as high yield stress and high strength, which are an objective of the present invention.

As described above, with a conventional steel, it is difficult to ensure both the product between tensile strength and local elongation and the product between yield stress and uniform elongation.

The present inventors proposed, in PCT/JP2016/067448, a galvannealed steel sheet that is excellent in uniform deformability and local deformability. While PCT/JP2016/067448 ensures both a product of tensile strength and local elongation and a product of yield stress and uniform elongation, its content of C is relatively high, which may degrade spot weldability and requires improvement in current pattern of spot welding.

Hence, in the present invention, the present inventors conducted studies about how to secure a predetermined fraction or more of retained austenite while limiting the content of C.

An object of the present invention is to provide a high-strength steel sheet with Mn: 3.50 mass% or more and C: 0.24 mass% or less including retained austenite (hereafter, may be referred to as "residual $\gamma$") that has high uniform elongation and local elongation.

SOLUTION TO PROBLEM

The present invention is made to solve the problems described above, and the gist of the present invention is the following high-strength steel sheet.

(1) A high-strength steel sheet having a chemical composition consisting of, in mass percent:

C: 0.10 to 0.24%;
Mn: 3.50 to 12.00%;
Si: 0.005 to 5.00%;
Al: 0.005 to 5.00%;
P: 0.15% or less;
S: 0.030% or less;
N: 0.020% or less;
O: 0.010% or less;
Cr: 0 to 5.00%;
Mo: 0 to 5.00%;
Ni: 0 to 5.00%;
Cu: 0 to 5.00%;
Nb: 0 to 0.50%;
Ti: 0 to 0.50%;
W: 0 to 0.50%;
B: 0 to 0.010%;
Ca: 0 to 0.05%;
Mg: 0 to 0.05%;
Zr: 0 to 0.05%;
REM: 0 to 0.05%;
Sb: 0 to 0.50%;

Sn: 0 to 0.50%;
As: 0 to 0.05%; and
V: 0 to 2.0%;
with the balance: Fe and impurities, wherein
a steel micro-structure at a 1/4 sheet-thickness position includes, in area percent:

retained austenite: 10.0 to 55.0%;
high temperature tempered martensite: 30.0 to 75.0%; and
low temperature tempered martensite: 15.0 to 60.0%;

with the balance including:

fresh martensite: 0 to 10.0%;
pearlite: 0 to 5.0%; and
bainite: 0 to 5.0%.

(2) The high-strength steel sheet according to (1), wherein, in the steel micro-structure, a total of area fractions of the fresh martensite, the pearlite, and the bainite is, in area percent, 0 to 5.0%.

(3) The high-strength steel sheet according to (1) or (2), wherein, in the steel micro-structure, area fractions of the pearlite and the bainite are 0%.

(4) The high-strength steel sheet according to any one of (1) to (3), wherein the steel sheet has a tensile strength of 1180 MPa or more and a sheet thickness of 0.8 to 3.2 mm.

(5) The high-strength steel sheet according to any one of (1) to (4), wherein the chemical composition contains, in mass percent, C: 0.13 to 0.21%.

(6) The high-strength steel sheet according to any one of (1) to (5), wherein the chemical composition contains, in mass percent, Mn: 4.0 to 7.0%.

(7) The high-strength steel sheet according to any one of (1) to (6), wherein the chemical composition contains, in mass percent, Cr: 0 to 1.50%.

(8) The high-strength steel sheet according to any one of (1) to (7), wherein the chemical composition contains, in mass percent, Mo: 0 to 1.00%.

(9) The high-strength steel sheet according to any one of (1) to (8), wherein the chemical composition contains, in mass percent, Ni: 0 to 1.50%.

(10) The high-strength steel sheet according to any one of (1) to (9), wherein the chemical composition contains, in mass percent, Cu: 0 to 1.50%.

(11) The high-strength steel sheet according to any one of (1) to (10), wherein the chemical composition contains, in mass percent, B: 0 to 0.003%.

(12) The high-strength steel sheet according to any one of (1) to (11), wherein a surface of the steel sheet includes a galvanized layer, a galvannealed layer, or a Zn-Ni alloy plating layer.

ADVANTAGEOUS EFFECT OF INVENTION

According to the present invention, it is possible to obtain a high-strength steel sheet having a high uniform elongation and a high local elongation.

BRIEF DESCRIPTION OF DRAWINGS

Figure 1 is a graph illustrating a relation between area fraction of low temperature tempered martensite and YS × uEL.
Figure 2 is a graph illustrating a relation between area fraction of low temperature tempered martensite and YR.
Figure 3 is a graph illustrating a relation between area fraction of retained austenite and YS × uEL.
Figure 4 is a graph illustrating a relation between area fraction of retained austenite and TS × lEL.
Figure 5 is a graph illustrating a relation between area fraction of high temperature tempered martensite and YS × uEL.
Figure 6 is a graph illustrating a relation between area fraction of fresh martensite and TS × lEL.

DESCRIPTION OF EMBODIMENT

The present inventors conducted intensive studies about a technique to solve the problems described above. As a result, it was found that in the steel sheet, dispersing a certain amount or more of residual γ, and bringing in the steel sheet predetermined amounts of high temperature tempered martensite, which is tempered at high temperature, and low temperature tempered martensite, which is tempered at low temperature, in combination enable high uniform elongation (uEL) and local elongation (lEL) as well as high yield stress (YS) and tensile strength (TS) to be achieved.

In a normal TRIP steel, uniform elongation is enhanced by making retained austenite present in the steel, but ferrite is present, which decreases yield stress. There is a method to enhance YS in which a main phase is made to include bainite and tempered martensite, but a ductility of the main phase is low, and uniform elongation cannot be enhanced by the method.

The present inventors found that YS can be enhanced by bringing in the steel both high temperature tempered martensite that is excellent in balance between ductility and hardness, and low temperature tempered martensite, and YS × uEL and TS × lEL can be enhanced by further making retained austenite present.

The present invention is made based on the findings described above. Requirements of the present invention will be described below in detail.

(A) Chemical Composition

The reasons for limiting contents of elements are as described below. In the following description, the symbol "%" for contents means "percent by mass".

C: 0.10 to 0.24%

C (carbon) is an element necessary to improve a steel sheet strength and secure retained austenite. C is also an element that contributes to improving a strength of low temperature tempered martensite. When a content of C is less than 0.10%, it is difficult to obtain a sufficient steel sheet strength and a sufficient amount of retained austenite. In contrast, when the content of C is more than 0.24%, pearlite and cementite precipitate in a large amount, degrading local ductility significantly. Accordingly, the content of C is set at 0.10 to 0.24%. The content of C is preferably 0.12% or more or 0.13% or more, more preferably 0.15% or more or 0.17% or more. The content of C is preferably 0.24% or less or 0.23% or less, more preferably 0.22% or less or 0.21% or less.

Mn: 3.50 to 12.00%

Mn (manganese) is, as with C, an element necessary to secure retained austenite. When a content of Mn is less than 3.50%, the effect of addition does not exert sufficiently. In contrast, when the content of Mn is more than 12.00%, an amount of austenite increases excessively, and low temperature tempered martensite is not obtained, resulting in a decrease in tensile strength and yield stress. The content of Mn is preferably 3.80% or more or 4.00% or more, more preferably 4.40% or more, 4.80% or more, or 5.10% or more. The content of Mn is preferably 11.00% or less or 10.00% or less, more preferably 9.00% or less, 8.00% or less, or 7.00% or less.

Si: 0.005 to 5.00%

Al: 0.005 to 5.00%

Si and Al are deoxidizers and also elements that have an effect of stabilizing ferrite and preventing precipitation of cementite, during annealing. When a content of either Si or Al is less than 0.005%, the effect of addition does not exert sufficiently. In contrast, when the contents of both of Si and Al are more than 5.00%, surface texture, paintability, and weldability deteriorate. Accordingly, contents of Si and Al are both set at 0.005 to 5.00%.

The contents of both elements are preferably 0.010% or more, more preferably 0.020% or more, still more preferably 0.030% or more. In particular, the content of Si may be set at 0.50% or more, 0.90% or more, or 1.05% or more. The contents of both elements are preferably 3.50% or less, more preferably 2.50% or less, still more preferably 2.10% or less. In particular, the content of Al may be set at 1.00% or less.

If the content of Al is more than 5.00%, delta ferrite remains at room temperature. The delta ferrite is transformed into elongated ferrite by hot rolling. The ferrite receives concentrated stresses during a tension test and pressing, which makes a test specimen or a steel sheet likely to be broken off. Also in this regard, Al is set at 5.00% or less. To improve a quality of the steel sheet, it is preferable to set Si + Al: 0.80% or more, more preferably 1.00% or more.

P: 0.15% or less

P (phosphorus) is an impurity element that is unavoidably contained from a row material of steel. When a content of P is more than 0.15%, ductility and weldability deteriorate. Accordingly, the content of P is set at 0.15% or less. The content of P is preferably 0.10% or less, 0.05% or less, or 0.020% or less. A lower limit of the content of P is set at 0%; however, reducing the content of P to less than 0.0001% increases production costs significantly, and therefore the lower limit may be set at 0.0001%.

S: 0.030% or less

S (sulfur) is an impurity element that is unavoidably contained from a row material of steel. When a content of S is more than 0.030%, hot rolling produces an expanded MnS, resulting in deteriorations in ductility and formability such as hole-expansion properties. Accordingly, the content of S is set at 0.030% or less. The content of S is preferably 0.015% or less or 0.009% or less. A lower limit of the content of S is set at 0%; however, reducing the content of S to less than 0.0001% increases production costs significantly, and therefore the lower limit may be set at 0.0001%.

N: 0.020% or less

N (nitrogen) is an impurity element that is unavoidably contained from a row material of steel or in a steel producing process. When a content of N is more than 0.020%, ductility deteriorates. Accordingly, the content of N is set at 0.020% or less. The content of N is preferably 0.015% or less, 0.010% or less, 0.0070% or less, or 0.0050% or less. A lower limit of the content of N is set at 0%; however, reducing the content of N to less than 0.0001% increases production costs significantly, and therefore the lower limit may be set at 0.0001%.

O: 0.010% or less

O (oxygen) is an impurity element that is unavoidably contained after deoxidation. When a content of O is more than 0.010%, ductility deteriorates. Accordingly, the content of O is set at 0.010% or less. The content of O is preferably 0.007% or less, 0.004% or less, or 0.0025% or less. A lower limit of O is set at 0%; however, reducing the content of O to less than 0.0001% increases production costs significantly, and therefore the lower limit may be set at 0.0001%.
A galvannealed steel sheet according to the present invention may contain, in addition to the elements described above, one or more elements selected from Cr, Mo, Ni, Cu, Nb, Ti, W, B, Ca, Mg, Zr, REM, Sb, Sn, As, and V by respective contents described below.

Cr: 0 to 5.00%

Mo: 0 to 5.00%

Ni: 0 to 5.00%

Cu: 0 to 5.00%

Cr (chromium), Mo (molybdenum), Ni (nickel), and Cu (copper) are elements that contribute to improvement of a steel sheet strength and may be contained as necessary. However, when all of contents of Cr, Mo, Ni, and Cu are more than 5.00%, strength increases excessively, resulting in deterioration in ductility. Accordingly, the contents of Cr, Mo, Ni, and Cu are all set at 5.00% or less.
The contents of the elements are all preferably 4.00% or less or 3.00%, more preferably 2.00% or less or 1.00% or less, still more preferably 0.80% or less or 0.50% or less. Lower limits of these elements are 0%, but in order to obtain the effect described above, setting a content of one or more elements selected from the elements at 0.01% or more raises no problem, and the content may be set at 0.02% or more. In order to reduce alloy costs, a total of the content may be set at 2.00% or less, 1.50% or less, 1.10% or less, 0.7% or less, or 0.40% or less.

Nb: 0 to 0.50%

Ti: 0 to 0.50%

W: 0 to 0.50%

Nb (niobium), Ti (titanium), and W (tungsten) are elements that contribute to improvement of a steel sheet strength by forming their fine carbides, nitrides, or carbonitrides, and therefore may be contained as necessary. However, when all of contents of Nb, Ti, and W are more than 0.50%, strength increases excessively, resulting in deterioration in ductility. Accordingly, the contents of Nb, Ti, and, W are all set at 0.50% or less.

The contents of the elements are all preferably 0.40% or less or 0.20% or less, more preferably 0.10% or less or 0.05% or less. Lower limits of these elements are 0%, but in order to obtain the effect described above, setting a content of one or more elements selected from the elements at 0.005% or more raises no problem, and the content may be set at 0.008% or more. In order to reduce alloy costs, a total of the content may be set at 0.50% or less, 0.20% or less, 0.10% or less, or 0.05% or less.

B: 0 to 0.010%

B is an element that contributes to improvement of a steel sheet strength by delaying transformation and contributes to strengthening of grain boundaries by precipitating in the grain boundaries, and therefore may be contained as necessary. In contrast, when a content of B is more than 0.010%, compounds of B precipitate in a large amount, resulting in embrittlement of the steel sheet. Accordingly, the content of B is set at 0.010% or less. The content of B is preferably 0.005% or less or 0.0030% or less, more preferably 0.0020% or less or 0.0016% or less. A lower limit of B is 0%, but in order to obtain the effect described above, setting the content of B at 0.0002% or more raises no problem, and the content may be set at 0.0003% or more.

Ca: 0 to 0.05%

Mg: 0 to 0.05%

Zr: 0 to 0.05%

REM: 0 to 0.05%

Ca (calcium), Mg (magnesium), Zr (zirconium), REM (rare earth element) are elements that contribute improvements of local ductility and hole-expansion properties by controlling shapes of sulfides and oxides, and therefore may be contained as necessary. However, when all of contents of Ca, Mg, Zr, and REM are more than 0.50%, workability deteriorates. Accordingly, the contents of Ca, Mg, Zr, and REM are all set at 0.05% or less.

The contents of the elements are all preferably 0.03% or less or 0.01% or less, more preferably 0.0060% or less or 0.0040% or less. In a case where two or more elements selected from Ca, Mg, Zr, and REM are contained in combination, a total of contents of the elements are preferably set at 0.05% or less or 0.02% or less, more preferably 0.01% or less or 0.0060% or less. Lower limits of these elements are 0%, but in order to obtain the effect described above, a content of one or more elements selected from the elements may be set at 0.0001% or more, and the content may be set at 0.0002% or more.

Here, in the present invention, REM refers to Sc (scandium), Y (yttrium), and lanthanoids, 17 elements in total, and the content of REM means a total content of these elements. In industrial practice, the lanthanoids are added in a form of misch metal.

Sb: 0 to 0.50%

Sn: 0 to 0.50%

Sb (antimony) and Sn (tin) are elements that have effects of improving a surface texture and enhancing platability by preventing oxidizable elements including Mn, Si, and/or Al, or the like in the steel sheet from dispersing to form their oxides, and therefore may be contained as necessary. However, when both of contents of Sb and Sn are more than 0.50%, the effect of addition is saturated. Accordingly, the contents of Sb and Sn are all set at 0.50% or less.

The contents of the elements are both preferably 0.35% or less or 0.15% or less, more preferably 0.08% or less or 0.03% or less. Lower limits of these elements are 0%, but in order to obtain the effect described above, a content of one or more elements selected from the elements may be set at 0.010% or more.

As: 0 to 0.05%

As (arsenic) is, as with Sb and Sn, an element that has effects of improving a surface texture and enhancing platability by preventing oxidizable elements including Mn, Si, and/or Al, or the like in the steel sheet from dispersing to form their oxides, and therefore may be contained as necessary. However, when a content of As is more than 0.05%, the effect of addition is saturated. Accordingly, the content of As is set at 0.05% or less. The content of As is preferably 0.02% or less, more preferably is 0.01% or less. A lower limit of As is 0%, but in order to obtain the effect described above, the content of As may be set at 0.005% or more. A total of Sb, Sn, and As may be set at 0.05% or less, 0.03% or less, or 0.01% or less, as necessary.

V: 0 to 2.0%

V (vanadium) is an element that contributes to improvement of strength and toughness by forming precipitations and refining grains, and therefore may be contained as necessary. However, when a content of V is more than 0.50%, the above effect is saturated, resulting in an increase in production costs. Accordingly, the content of V is set at 2.0% or less or 1.0% or less. The contents of V is preferably 0.50% or less or 0.30% or less, more preferably 0.10% or less, still more preferably 0.06% or less. A lower limit of V is 0%, but in order to obtain the effect described above, the content of V may be set at 0.001% or more or 0.005% or more.

In the chemical composition of the steel sheet according to the present invention, the balance consists of Fe and impurities.

The term "impurities" herein means components that are mixed in a steel sheet in producing the steel sheet industrially, owing to various factors including raw materials such as ores and scraps, and a producing process, and are allowed to be mixed in the steel sheet within the range in which the impurities have no adverse effect on the present invention.

(B) Steel Micro-Structure of Steel Sheet

A steel micro-structure at a 1/4 sheet-thickness position of the steel sheet according to the present invention will be described. An area fraction of a steel micro-structure changes depending on an annealing condition and influences mechanical properties including strength, uniform elongation, local elongation, and the like. Desired mechanical properties differ, for example, between components for an automobile, and therefore an annealing condition is selected as necessary to control area fractions of different steel micro-structure. In the following description, "%" means "area %".

Retained austenite: 10.0 to 55.0%

Retained austenite (hereafter, also referred to as "residual $\gamma$") is steel micro-structure that exerts transformation induced plasticity, enhancing ductility, particularly uniform elongation. In order for the steel sheet according to the present invention to obtain an excellent uniform elongation, an area fraction of the residual $\gamma$ needs to be set at 10.0% or more. In contrast, when the area fraction of the residual $\gamma$ is more than 55.0%, yield stress decreases, and therefore the area fraction of the residual $\gamma$ is set at 55.0% or less. The area fraction of the residual $\gamma$ is preferably 13.0% or more, 15.0% or more, or 18.0% or more, more preferably 20.0% or more. The area fraction of the residual $\gamma$ is preferably 50.0% or less, more preferably 45.0% or less, 40.0% or less, 35.0% or less, or 31.0% or less.

Residual $\gamma$ in the steel micro-structure according to the present invention mainly include those having thin shapes like martensitic laths. A thickness of the thin residual $\gamma$ is 1 $\mu$m or less, mostly about 0.02 to 0.1 $\mu$m. Making the lath-shaped residual $\gamma$ and low temperature tempered martensite to be described later coexist with each other is difficult using a conventional method and can be achieved by employing a production method to be described later. The conventional method refers to a method for obtaining residual $\gamma$ by producing austenite single phases, then cooling the austenite single phases to room temperature to produce almost martensite, then heating the martensite in a two-phase region to cause C and Mn concentrate in austenite (e.g., see Non-Patent Document 1 and Patent Document 4).

In the present invention, a second cooling process needs to be performed to bring about a structure state in which austenite and martensite exist, as will be described later. Then, a second annealing process is performed to produce austenite from the martensite to form the austenite into thin lath-shaped steel micro-structure. Steel micro-structure surrounding the austenite is high temperature tempered martensite. The austenite is transformed into retained austenite through a cooling process to room temperature.

The austenite after the second cooling process is relatively coarse structures and transformed into martensite through a third cooling process. Through the above processes, it is possible to make lath-shaped austenite and low temperature tempered martensite coexist.

High temperature tempered martensite: 30.0 to 75.0%

High temperature tempered martensite is martensite that is tempered mainly at about 550 to 700°C, and how to measure the high temperature tempered martensite will be described later. To improve the formability, an area fraction of the high temperature tempered martensite is set at 30.0 to 75.0%. The area fraction of the high temperature tempered martensite is preferably 33.0% or more, 36.0% or more, or 38.0% or more, and is preferably 70.0% or less, 65.0% or less, 60.0% or less, or 55.0% or less.

Low temperature tempered martensite: 15.0 to 60.0%

Low temperature tempered martensite is structure obtained by tempering, mainly at about 250 to 480°C, fresh martensite produced in the third cooling process described later, and how to measure the low temperature tempered martensite will be described later.
The low temperature tempered martensite has a low uniform elongation but resists decreasing the local elongation as compared with the fresh martensite described later and is excellent in yield stress and tensile strength. For that reason, an area fraction of the low temperature tempered martensite is set at 15.0% or more. The area fraction of the low temperature tempered martensite may be set according to a desired strength level, but an excessive amount of low temperature tempered martensite decreases the uniform elongation, and therefore the area fraction is set at 60.0% or less. To improve the formability, a lower limit of the low temperature tempered martensite may be set at 20.0%, 25.0%, 30.0%, 34.0%, or 38.0%. To improve the uniform elongation, an upper limit of the low temperature tempered martensite may be set at 55.0%, 50.0%, 46.0%, or 42.0%.
In the steel micro-structure at the 1/4 sheet-thickness position of the steel sheet according to the present invention, the balance includes fresh martensite, pearlite, and bainite.

Fresh martensite: 0 to 10.0%

In a tempering process, a slight amount of cementite precipitates from austenite, which destabilizes the austenite, and in a cooling process after the tempering process, fresh martensite may be produced. When an area fraction of the fresh martensite is more than 10.0%, YS and local elongation decrease, and furthermore, the area fraction of the residual $\gamma$ is reduced, resulting in a decrease in uniform elongation. Accordingly, the area fraction of the fresh martensite is set at 10.0% or less. The area fraction of the fresh martensite is preferably 5.0% or less, more preferably 3.0% or less, most preferably 0%, that is, a steel micro-structure without the fresh martensite.

Pearlite: 0 to 5.0%

Pearlite may be produced from austenite in cooling during annealing, or during galvannealing treatment in plating. When an area fraction of the pearlite is more than 5.0%, the area fraction of the residual $\gamma$ is reduced, resulting in significant decreases in strength and ductility. Accordingly, the area fraction of the pearlite is set at 5.0% or less. The area fraction of the pearlite is preferably made as low as possible, preferably 3.0% or less, most preferably 0%.

Bainite: 0 to 5.0%

The steel micro-structure according to the present invention may contain bainite. Bainite transformation resists progressing with the content of Mn of the steel sheet according to the present invention, and an area fraction of the bainite is set at 5.0% or less. The area fraction of the bainite is preferably 3.0% or less, most preferably 0%.
A total of the area fractions of the fresh martensite, the pearlite, and the bainite may be set at 5.0% or less, 3.0% or less, or 1.0% or less. It is more preferable that the total of the area fractions of these kinds of steel micro-structure in the balance is 0%.
A method for determining the area fraction of each of the above kinds of steel micro-structure in the present invention will be described below.
First, a sample including a cross section that is cut in such a manner as to be parallel to a rolling direction and is subjected to mirror polishing and then electrolytic grinding is prepared, and then regions in the sample that lie at a position from a surface by 1/4 of a sheet thickness (hereafter, referred to as "1/4 sheet-thickness position"), are 100 $\mu$m $\times$ 100 $\mu$m or more in area, and are spaced from each other by 0.1 $\mu$m, are measured using a SEM-EBSD. Subsequently, analysis software from TSL Solutions Ltd. is used to calculate an average value of in-grain image qualities of grains (Grain Average Image Quality: GAIQ value). Then, an area fraction of a region determined as FCC is determined to be the area fraction of the retained austenite.

Next, a method described in F. S. Lepera: Journal of Metals 32, No. 3, (1980) 38-39 is used to etch the cross section parallel to the rolling direction, so as to expose fresh martensite and retained austenite. Subsequently, observation is performed at the 1/4 sheet-thickness position under an optical microscope at 1000x magnification, and a steel micro-structure photograph is subjected to image processing, so as to measure a total area fraction (%) of the fresh martensite and the retained austenite. Etching reagent is assumed to be made by mixing a solution of 4% $Na_2S_2O_5$ dissolved in distilled water and a solution of 4% $[C_6H_2(NO)_3OH]$ dissolved in ethanol at 1:1.

Then, the area fraction of the fresh martensite is determined by subtracting the area fraction of the retained austenite measured by the method described above from a value of the total area fraction of the fresh martensite and the retained austenite.

Then, a fraction of grains having GAIQ values at the 1/4 sheet-thickness position of 5000 or less is determined as the total area fraction of the low temperature tempered martensite and the fresh martensite. The area fraction of the low temperature tempered martensite is determined by subtracting the area fraction of the fresh martensite from this value.

A cross section perpendicular to the rolling direction is cut, subjected to mirror polishing, and then etched using Nital. SEM observation is performed on the sample. The SEM observation is performed at 5000x magnification, and as a measurement region, four or more fields of view each of which is a 25 $\mu$m $\times$ 20 $\mu$m region at the 1/4 sheet-thickness position are set. After the Nital etching, the sample is observed under a SEM, and steel micro-structures that have no substructure and are hollowed out are determined to be ferrite or high temperature tempered martensite. Out of such steel micro-structures, steel micro-structures whose major axes and minor axes make ratios of two or more are determined to be the high temperature tempered martensite. The major axes and the minor axes are determined as follows. First, one of grains is focused in photographs captured in the above observation, and out of lines each connecting a grain boundary and another grain boundary, a longest line is determined to be the major axis. Then, out of lines each connecting the grain boundary and another grain boundary and dividing the major axis, a shortest line is determined to be the minor axis. That is, out of steel micro-structures that have no substructure and are hollowed out, a fraction of steel micro-structures whose major axes and minor axes make ratios of two or more is determined to be the area fraction of the high temperature tempered martensite, and a fraction of steel micro-structures whose major axes and minor axes make ratios of less than two is determined to be an area fraction of the ferrite.

For the pearlite, after Nital etching is performed, four or more fields of view each of which is a 25 $\mu$m $\times$ 20 $\mu$m region at the 1/4 sheet-thickness position are observed under a SEM, and a fraction of steel micro-structures in which a lamellar steel micro-structure can be seen is determined to be an area fraction of the pearlite. For the bainite, similarly, after Nital etching is performed, four or more fields of view each of which is a 25 $\mu$m $\times$ 20 $\mu$m region at the 1/4 sheet-thickness position are observed under a SEM, and a fraction of steel micro-structures whose major axes and minor axes make ratios of two or more and in which cementite is recognized under a 5000x SEM is determined to be an area fraction of the bainite.

(C) Mechanical Properties

The tensile strength (TS) is preferably made as high as possible and set at 1180 MPa or more. For example, when the steel sheet is used as a starting material for an automobile, the steel sheet having a high strength enables reduction of a sheet thickness of the steel sheet, enabling weight reduction of the automobile. A lower limit of the tensile strength may be set at 250 MPa. No special limitation needs to be provided for an upper limit of the tensile strength, but the tensile strength is preferably set at 1650 MPa or less or 1600 MPa or less. To obtain the above effect of weight reduction, it is preferable that the yield stress (YS) of the steel sheet is high, and an amount of work hardening of the steel sheet after working (after yielding) is large. When the yield stress (YS) is high, and the amount of work hardening is large, hardness brought by deformation increases.

The amount of work hardening can be expressed by using an n value as an index, and the n value is a value similar to uEL. Hence, for the steel sheet according to the present invention, yield stress (YS) $\times$ uniform elongation (uEL) is used as an index. For the steel sheet according to the present invention, YS $\times$ uEL is set as YS $\times$ uEL $\geq$ 10000 MPa%. A tensile test specimen is assumed to be a test specimen No. 5 in JIS Z2241 (a sheet specimen including a parallel portion being 25 mm wide and having an original gauge length of 50 mm).

To perform press forming on a steel sheet, it is desirable that the steel sheet has an excellent uniform elongation (uEL) and an excellent local elongation (lEL). By a time the steel sheet undergoes local deformation, the steel sheet strength reaches the tensile strength (TS), and as an index to express this state, tensile strength (TS) $\times$ local elongation (lEL) is employed. For the steel sheet according to the present invention, TS $\times$ lEL is set as TS $\times$ lEL $\geq$ 6000 MPa%.

The yield stress is an index to assure a hardness of a steel sheet subjected to the forming, and a yield ratio (yield stress / tensile strength) is preferably made as high as possible. The yield ratio is preferably 0.70 or more. More preferably, the yield ratio is 0.71 or more or 0.72 or more.

In the present invention, as the tensile strength and the yield stress, values determined in a tension test performed in a perpendicular-to-rolling direction. The perpendicular-to-rolling direction means a direction perpendicular to a rolling direction and a thickness of a steel sheet, that is, a width direction.

### (D) Producing Method

The steel sheet according to the present invention can be produced by, a producing method described below. In the producing method described below, the following processes (a) to (m) are performed in order. These processes will be described in detail.

### (a) Melting Process

An ingot or a slab having the chemical composition described above is melted. No special limitation is imposed on conditions for the melting process, and a common method may be used.

### (b) Hot Rolling Process

The ingot or the slab is heated and subjected to hot rolling to be produced into a hot-rolled steel sheet. It is preferable that a heating temperature before the hot rolling is set at 1100 to 1170°C, and a finishing temperature of the hot rolling is set at 880 to 970°C. It is preferable that a path of rolling with a large rolling reduction of 10% or more is performed at least three times in final six paths of the hot rolling.
When the heating temperature is less than 1100°C, the temperature may be so lowered during conveyance for the hot rolling that finish rolling cannot be completed at a required temperature. In contrast, when the heating temperature is more than 1170°C, austenite may coarsen during the heating, making crystals in the rolled steel sheet coarse.
Since the steel having the chemical composition defined in the present invention is hard, if the finishing temperature is less than 880°C, a large load is applied to a rolling mill, which makes it difficult to perform the hot rolling. In contrast, when the finishing temperature is more than 970°C, the crystals in the rolled steel sheet may coarsen, and the heating temperature is therefore preferably 1170°C or less.

### (c) First Cooling Process

The hot-rolled steel sheet subjected to the finish rolling is cooled. There is no special limitation imposed on cooling conditions of the first cooling process, but it is preferable that the steel sheet is cooled at an average cooling rate of 20°C/s or more and the cooling is stopped at a temperature range of 550 to 650°C. The above range of temperature allows a temperature range in a coiling process to be satisfied easily.

### (d) Coiling Process

The hot-rolled steel sheet after the stop of the cooling is coiled. A coiling temperature is preferably 450 to 600°C. When the coiling temperature is less than 450°C, a shape of the steel sheet deteriorates. In addition, when the coiling temperature is more than 600°C in a case where the content of Mn is high as in the present invention, scales become large in thickness and the steel sheet become difficult to be pickled.

### (e) Cold Rolling Process

The coiled hot-rolled steel sheet is uncoiled, pickled, and then subjected to cold rolling to be produced into a cold-rolled steel sheet. A rolling reduction is preferably set at 40 to 65%. When the rolling reduction is less than 40%, the sheet thickness becomes large. Therefore, when the steel sheet is used as components of an automobile parts, a weight of the automobile tends to be heavy. In contrast, when the rolling reduction is more than 65%, cold rolling is difficult to finish in a short time. In addition, the ductility after annealing may decrease. A thickness of the cold-rolled steel sheet is preferably set at within a range of 0.8 to 3.0 mm.

### (f) First Annealing Process

After the cold rolling process, the cold-rolled steel sheet is subjected to annealing in which the cold-rolled steel sheet is retained in a temperature range of 850 to 970°C for 90 seconds or more. By the retention in the above temperature range, the steel micro-structure is transformed into steel micro-structure of an austenite single phase. When an annealing temperature is less than 850°C, or a retention duration is less than 90 seconds, an amount of the austenite is reduced, and finally a required amount of the low temperature tempered martensite cannot be secured, resulting in a decrease in the yield stress.

When the annealing temperature is more than 970°C, a heating furnace may be damaged, and furthermore, scales are produced in a large amount on a steel sheet surface, making the steel sheet surface uneven after the pickling, which is undesirable for a steel sheet for an automobile. Also, when the retention duration is more than 180 seconds, scales are produced in a large amount on a steel sheet surface, making the steel sheet surface uneven after the pickling, which is undesirable for a steel sheet for an automobile. Accordingly, the retention duration in the first annealing process is preferably set at 180 seconds or less.

(g) Second Cooling Process

After the first annealing process, the steel sheet is cooled to a temperature range of 150 to 250°C. In the temperature range, phase transformation resists occurring. A cooling rate is preferably 1 to 100°C/s on average. Through the second cooling process, martensite is produced, and the martensite is transformed into high temperature tempered martensite and reverse-transformed austenite in a second annealing process described later. By selecting a cooling temperature according to a desired strength or desired properties as appropriate, it is possible to adjust the area fraction of the high temperature tempered martensite.

In addition, it is possible to make austenite and martensite coexist in this cooling process. A major portion of what is the austenite during the cooling process is transformed into martensite through the second annealing process and the third cooling process and transformed into low temperature tempered martensite in an annealing process performed thereafter. Meanwhile, a portion of what is the martensite during the cooling process is transformed into high temperature tempered martensite in the second annealing process, as described above. Hence, by adjusting an amount of the austenite and an amount of the martensite by means of a temperature of the cooling process, it is possible to make an amount of low temperature tempered martensite and an amount of high temperature tempered martensite amount in a final steel micro-structure fall within ranges according to the present invention.

When a cooling stop temperature is less than 150°C, the austenite in the cooling process is reduced, and the low temperature tempered martensite in the final steel micro-structure is reduced. In contrast, when the cooling temperature is more than 250°C, the amount of the martensite is reduced, which makes it difficult to finally secure the high temperature tempered martensite by 30.0% or more. The cooling stop temperature is preferably 180°C or more and is preferably 230°C or less, more preferably 220°C or less.

(f) Second Annealing Process

After the second cooling process, the steel sheet is subjected to annealing in which the steel sheet is retained in a temperature range of 550°C or more to less than $Ac_1$ point for 120 seconds or more. When an annealing temperature is less than 550°C, cementite and pearlite precipitate in a large amount, which reduces the retained austenite. The annealing temperature is preferably 580°C or more.

In contrast, when the annealing temperature is $Ac_1$ point or more, an amount of the residual austenite obtained is reduced. It is inferred that a reason for this is as follows. Reverse transformation to austenite proceeds excessively, which increases austenite excessively during heating. Then, contents of C and Mn in the austenite are reduced, which destabilizes the austenite. The destabilized austenite is then transformed into martensite in the second cooling process, which reduces the retained austenite.

$Ac_1$ point is supposed to be determined by the following formula.

$$Ac_1 = 723 + 29.1 \times Si - 10.7 \times Mn + 16.9 \times Cr - 16.9 \times Ni$$

Here, symbols of elements in the formula mean contents of respective elements (in mass percent).

At the above annealing temperature, a retention duration is set at 120 seconds or more. When the retention duration is less than 120 seconds, the reverse transformation to austenite does not proceed, and less retained austenite is obtained. The retention duration can be set as appropriate in relation to the annealing temperature, but performing the annealing even for eight hours or more makes no significant difference and only increases industrial costs. Therefore, the upper limit is about eight hours.

In the second annealing process, the steel sheet may be heated in a preheated furnace or may be heated by IH or the like. When a heating rate is less than 10°C/s, less retained austenite is obtained. It is inferred that cementite precipitates in a large amount in the middle of the heating and remains undissolved in heating performed thereafter, with a result that C in the retained austenite is reduced. Meanwhile, to control the temperature of the second annealing process, a substantial upper limit of the heating rate is about 25°C/s.

(g) Third Cooling Process

After the second annealing process, the steel sheet is cooled to room temperature. If the steel sheet is not cooled to room temperature, fresh martensite is produced in a tempering process described later, which may decrease YS. An average cooling rate is preferably set at 8°C/s or more. When the average cooling rate is less than 8°C/s, bainite tends to be produced, which decreases YR and YS $\times$ uEL.

(j) Tempering Process

After the third cooling process, the steel sheet is subjected to tempering in which the steel sheet is retained in a temperature range of 250 to 480°C for 1 second or more. Through the tempering process, the low temperature tempered martensite is produced. When a tempering temperature is less than 250°C, an effect brought by the tempering cannot be obtained sufficiently, with a result that the fresh martensite is left in a large amount. As a result, YS decreases, TS increases, and the yield ratio decreases. The tempering temperature is preferably 200°C or more.

In contrast, when the tempering temperature is more than 480°C, the low temperature tempered martensite becomes excessively soft, decreasing YS and TS extremely, and the retained austenite is transformed into pearlite, also decreasing uEL; therefore, the temperature range of the tempering process is set at 480°C or less. The temperature range is preferably 460°C or 400°C or less. When the retention duration is more than one hour, less retained austenite is obtained, and therefore the retention duration is preferably set at one hour or less.

When a (Si + Al) amount of the steel sheet is 0.8 mass% or more, TS $\times$ uEL is further enhanced in tempering. The reason for this is not clear, but it is inferred that this is caused because C in martensite is not decomposed into cementite and concentrated in retained austenite. The (Si + Al) amount is preferably 1.0 mass% or more.

(k) Fourth Cooling Process

After the tempering process, the steel sheet is cooled to room temperature. A cooling rate of the fourth cooling process is not limited to a specific rate because a change in steel micro-structure is small as long as the cooling rate is higher than that of air cooling. However, when the cooling rate is less than 5°C/s, there is a risk of producing a large amount of bainite, as in the third cooling process. In contrast, in a case where the cooling is performed at a cooling rate more than 80°C/s, uneven cooling tends to occur, which degrades a shape of the steel sheet. Accordingly, the cooling rate is preferably set at 5 to 80°C/s or less.

(l) Plating Process

After the tempering process, the steel sheet cooled at room temperature in the fourth cooling process may be subjected to galvanizing, galvannealing, or Zn-Ni alloy plating. The Zn-Ni alloy plating is performed in a form of electrolytic plating. The galvanizing can be performed by immersing the steel sheet cooled to room temperature in the fourth cooling process in a galvanizing bath at 460°C. Alternatively, the plating may be performed in the tempering process by immersing the steel sheet in a galvanizing bath after the third cooling process.

(m) Galvannealing Process

In the galvannealing, galvannealing treatment may be performed by heating the galvanized steel sheet to 480 to 500°C. As with the galvanized steel sheet, the galvannealing treatment may be performed in the tempering process.

The sheet thickness of the steel sheet discussed in the present invention is mainly 0.8 to 3.0mm. An upper limit of the sheet thickness may be set at 2.8 mm or 2.5 mm, as necessary.

Hereunder, the present invention is more specifically described with reference to Examples, but the present invention is not limited to these Examples.

EXAMPLE

Slabs that were 240 mm thick and had chemical compositions shown in Table 1 were produced. The slabs were subjected to hot rolling under conditions shown in Tables 2 and 3 to be formed into hot-rolled steel sheets. At that point, a path of rolling with a large rolling reduction of 10% or more was performed at least three times. The hot-rolled steel sheets were coiled after cooled to the coiling temperature by water spray. The produced hot-rolled steel sheets were subjected to pickling to remove scales and subjected to cold rolling under conditions shown in Tables 2 and 3, to be manufactured into cold-rolled steel sheets having a thickness of 1.2 mm.

[Table 1]

Table 1

| Steel | Chemical composition (in mass%, balance: Fe and impurities) | | | | | | | | | Ac1 (°C) |
|---|---|---|---|---|---|---|---|---|---|---|
| | C | Si | Mn | P | S | Al | N | O | others | |
| A | 0.20 | 1.40 | 5.89 | 0.008 | 0.0007 | 0.032 | 0.0030 | <0.001 | - | 701 |
| B | 0.13 | 1.26 | 8.67 | 0.007 | 0.0009 | 0.027 | 0.0034 | <0.001 | - | 667 |
| C | 0.55 | 1.12 | 4.99 | 0.001 | 0.0010 | 0.034 | 0.0029 | <0.001 | - | 702 |
| D | 0.20 | 1.29 | 3.94 | 0.008 | 0.0007 | 0.030 | 0.0030 | <0.001 | - | 718 |
| E | 0.20 | 0.03 | 11.22 | 0.008 | 0.0007 | 1.810 | 0.0030 | <0.001 | - | 604 |
| F | 0.20 | 0.05 | 5.89 | 0.008 | 0.0007 | 0.032 | 0.0030 | <0.001 | - | 661 |
| G | 0.20 | 1.37 | 5.93 | 0.008 | 0.0007 | 0.035 | 0.0030 | <0.001 | Nb: 0.10 | 699 |
| H | 0.20 | 1.38 | 5.92 | 0.008 | 0.0007 | 0.033 | 0.0030 | <0.001 | Ti: 0.12 | 700 |
| I | 0.20 | 1.38 | 5.94 | 0.008 | 0.0007 | 0.030 | 0.0030 | <0.001 | Ni: 0.97 | 683 |
| J | 0.20 | 1.40 | 5.87 | 0.008 | 0.0007 | 0.030 | 0.0030 | <0.001 | Cr: 1.03 | 718 |
| K | 0.20 | 1.38 | 5.86 | 0.008 | 0.0007 | 0.032 | 0.0030 | <0.001 | Ca:0.0010, REM:0.009 | 700 |
| L | 0.13 | 1.32 | 8.74 | 0.007 | 0.0009 | 0.027 | 0.0034 | <0.001 | Mo: 0.31 | 668 |
| M | 0.55 | 1.12 | 5.01 | 0.001 | 0.0010 | 0.037 | 0.0029 | <0.001 | Cu: 0.10, Ni: 0.21 | 702 |
| N | 0.20 | 1.26 | 3.92 | 0.008 | 0.0007 | 0.034 | 0.0030 | <0.001 | W: 0.12 | 718 |
| O | 0.20 | 0.10 | 11.18 | 0.008 | 0.0007 | 1.820 | 0.0030 | <0.001 | B: 0.0015 | 606 |
| P | 0.20 | 0.03 | 5.93 | 0.008 | 0.0007 | 0.033 | 0.0030 | <0.001 | Mg: 0.001 | 660 |
| Q | 0.13 | 1.30 | 8.71 | 0.007 | 0.0009 | 0.027 | 0.0034 | <0.001 | Zr: 0.04 | 668 |
| R | 0.55 | 1.13 | 4.98 | 0.001 | 0.0010 | 0.032 | 0.0029 | <0.001 | Sb: 0.02 | 703 |
| S | 0.20 | 1.26 | 3.86 | 0.008 | 0.0007 | 0.033 | 0.0030 | <0.001 | Sn: 0.02 | 718 |
| T | 0.20 | 0.07 | 11.19 | 0.008 | 0.0007 | 1.800 | 0.0030 | <0.001 | As: 0.0005 | 605 |
| U | 0.20 | 1.36 | 5.91 | 0.008 | 0.0007 | 0.037 | 0.0030 | <0.001 | V: 0.91 | 699 |
| a | 0.05 * | 1.42 | 5.87 | 0.008 | 0.0006 | 0.054 | 0.0027 | <0.001 | - | 702 |
| b | 0.89 * | 1.39 | 5.88 | 0.008 | 0.0080 | 0.031 | 0.0026 | <0.001 | - | 701 |
| c | 0.20 | 1.36 | 2.86 * | 0.008 | 0.0007 | 0.032 | 0.0031 | <0.001 | - | 732 |
| d | 0.20 | 1.44 | 13.86 * | 0.009 | 0.0007 | 0.042 | 0.0031 | <0.001 | - | 617 |
| * indicates that conditions do not satisfy those defined by the present invention. | | | | | | | | | | |

[Table 2]

Table 2

| Test No. | Steel | Hot Rolling Process | | | First Cooling Process | | Coiling Process | Rolling reduction (%) | First Annealing Process | | Second Cooling Process | | Second Annealing Process | | | Third Cooling Process | Tempering Process | |
|---|---|---|---|---|---|---|---|---|---|---|---|---|---|---|---|---|---|---|
| | | Heating temperature (°C) | Heating time (min) | Finishing temperature (°C) | Average cooling rate (°C/s) | Cooling stop temperature (°C) | Coiling temperature (°C) | | Maximum annealing temperature (°C) | Annealing duration (s) | Average cooling rate (°C/s) | Cooling stop temperature (°C) | Average heating rate (°C/s) | Maximum annealing temperature (°C) | Annealing duration (s) | Average cooling rate (°C/s) | Tempering temperature (°C) | Retention duration (s) |
| 1 | A | 1150 | 240 | 900 | 50 | 560 | 500 | 60 | 910 | 120 | 10 | 200 | 20 | 600 | 580 | 10 | 370 | 320 |
| 2 | A | 1150 | 240 | 900 | 50 | 560 | 500 | 60 | 910 | 120 | 10 | 200 | 13 | 600 | 580 | 10 | 370 | 320 |
| 3 | A | 1150 | 240 | 903 | 20 | 640 | 540 | 60 | 860 | 120 | 10 | 200 | 20 | 600 | 580 | 10 | 370 | 320 |
| 4 | A | 1150 | 240 | 900 | 50 | 550 | 500 | 60 | 860 | 120 | 10 | 200 | 20 | 600 | 580 | 10 | 370 | 320 |
| 5 | A | 1150 | 240 | 900 | 50 | 560 | 500 | 60 | 970 | 120 | 10 | 200 | 20 | 600 | 580 | 10 | 370 | 320 |
| 6 | A | 1150 | 240 | 900 | 50 | 560 | 500 | 60 | 690 | 120 | 10 | 200 | 20 | 600 | 580 | 10 | 370 | 320 |
| 7 | A | 1150 | 240 | 910 | 20 | 680 | 632 | 60 | 820 | 15 | 10 | 200 | 20 | 600 | 580 | 10 | 370 | 320 |
| 8 | A | 1150 | 240 | 900 | 50 | 560 | 500 | 60 | 910 | 120 | 1 | 200 | 20 | 600 | 580 | 10 | 370 | 320 |
| 9 | A | 1150 | 240 | 900 | 50 | 560 | 500 | 60 | 910 | 120 | 10 | 20 | 20 | 600 | 580 | 10 | 370 | 320 |
| 10 | A | 1150 | 240 | 900 | 50 | 560 | 500 | 60 | 910 | 120 | 10 | 400 | 20 | 600 | 580 | 10 | 370 | 320 |
| 11 | A | 1150 | 240 | 900 | 50 | 550 | 500 | 60 | 910 | 120 | 10 | 200 | 20 | 730 | 580 | 10 | 370 | 320 |
| 12 | A | 1150 | 240 | 900 | 50 | 560 | 500 | 60 | 910 | 120 | 10 | 200 | 20 | 530 | 580 | 10 | 370 | 320 |
| 13 | A | 1150 | 240 | 900 | 50 | 550 | 500 | 60 | 910 | 15 | 10 | 200 | 20 | 600 | 60 | 10 | 370 | 320 |
| 14 | A | 1150 | 240 | 900 | 50 | 550 | 500 | 60 | 910 | 120 | 10 | 200 | 20 | 600 | 580 | 10 | 130 | 18 |
| 15 | A | 1150 | 240 | 900 | 50 | 550 | 500 | 60 | 910 | 120 | 10 | 200 | 20 | 600 | 580 | 10 | 550 | 19 |
| 16 | B | 1150 | 240 | 943 | 50 | 550 | 500 | 52 | 920 | 120 | 5 | 180 | 20 | 590 | 700 | 10 | 390 | 400 |
| 17 | C | 1150 | 240 | 896 | 50 | 560 | 500 | 52 | 920 | 120 | 10 | 165 | 20 | 600 | 580 | 10 | 360 | 400 |
| 18 | D | 1150 | 240 | 902 | 50 | 560 | 500 | 52 | 920 | 120 | 10 | 250 | 20 | 630 | 420 | 10 | 350 | 200 |
| 19 | E | 1150 | 240 | 950 | 50 | 550 | 500 | 52 | 930 | 120 | 10 | 160 | 20 | 570 | 800 | 10 | 350 | 300 |
| 20 | F | 1150 | 240 | 910 | 50 | 550 | 500 | 52 | 890 | 120 | 10 | 210 | 20 | 600 | 600 | 10 | 350 | 300 |
| 21 | G | 1150 | 240 | 920 | 50 | 550 | 500 | 52 | 910 | 120 | 10 | 200 | 20 | 600 | 580 | 10 | 370 | 320 |
| 22 | H | 1150 | 240 | 922 | 50 | 550 | 500 | 52 | 910 | 120 | 10 | 200 | 20 | 600 | 580 | 10 | 370 | 320 |
| 23 | I | 1150 | 240 | 925 | 50 | 550 | 500 | 52 | 910 | 120 | 10 | 170 | 20 | 590 | 580 | 10 | 370 | 320 |
| 24 | J | 1150 | 240 | 922 | 50 | 550 | 500 | 52 | 910 | 120 | 10 | 170 | 20 | 590 | 580 | 10 | 370 | 320 |
| 25 | K | 1150 | 240 | 930 | 50 | 550 | 500 | 52 | 910 | 120 | 10 | 200 | 20 | 600 | 580 | 10 | 370 | 320 |
| 26 | L | 1150 | 240 | 943 | 50 | 550 | 500 | 52 | 920 | 120 | 5 | 180 | 20 | 590 | 700 | 10 | 390 | 400 |
| 27 | M | 1150 | 240 | 896 | 50 | 560 | 500 | 52 | 920 | 120 | 10 | 165 | 20 | 600 | 580 | 10 | 360 | 400 |
| 28 | N | 1150 | 240 | 902 | 50 | 550 | 500 | 52 | 920 | 120 | 10 | 250 | 20 | 630 | 420 | 10 | 350 | 200 |
| 29 | O | 1150 | 240 | 950 | 50 | 560 | 500 | 52 | 930 | 120 | 10 | 160 | 20 | 570 | 800 | 10 | 350 | 300 |
| 30 | P | 1150 | 240 | 910 | 50 | 560 | 500 | 52 | 890 | 120 | 10 | 210 | 20 | 600 | 600 | 10 | 350 | 300 |

* indicates that conditions do not satisfy those defined by the present invention.

[Table 3]

Table 3

| Test No. | Steel | Hot Rolling Process – Heating temperature (°C) | Heating time (min) | Finishing temperature (°C) | First Cooling Process – Average cooling rate (°C/s) | Cooling stop temperature (°C) | Coiling Process – Coiling temperature (°C) | Rolling reduction (%) | First Annealing Process – Maximum annealing temperature (°C) | Annealing duration (s) | Second Cooling Process – Average cooling rate (°C/s) | Cooling stop temperature (°C) | Second Annealing Process – Average heating rate (°C/s) | Maximum annealing temperature (°C) | Annealing duration (s) | Third Cooling Process – Average cooling rate (°C/s) | Tempering Process – Tempering temperature (°C) | Retention duration (s) |
|---|---|---|---|---|---|---|---|---|---|---|---|---|---|---|---|---|---|---|
| 31 | Q | 1150 | 240 | 943 | 50 | 550 | 500 | 52 | 920 | 120 | 5 | 180 | 20 | 590 | 700 | 10 | 390 | 400 |
| 32 | R | 1150 | 240 | 896 | 50 | 550 | 500 | 52 | 920 | 120 | 10 | 165 | 20 | 600 | 580 | 10 | 360 | 400 |
| 33 | S | 1150 | 240 | 902 | 50 | 560 | 500 | 52 | 920 | 120 | 10 | 250 | 20 | 630 | 420 | 10 | 350 | 200 |
| 34 | T | 1150 | 240 | 950 | 68 | 550 | 500 | 60 | 930 | 120 | 10 | 160 | 20 | 570 | 800 | 10 | 350 | 300 |
| 35 | U | 1250 | 240 | 906 | 50 | 560 | 500 | 52 | 910 | 120 | 10 | 200 | 20 | 600 | 580 | 10 | 370 | 320 |
| 36 | a * | 1150 | 240 | 938 | 50 | 550 | 500 | 52 | 900 | 120 | 10 | 240 | 20 | 650 | 580 | 10 | 370 | 320 |
| 37 | b * | 1150 | 240 | 938 | 50 | 550 | 500 | 52 | 910 | 120 | 10 | 200 | 20 | 590 | 580 | 10 | 370 | 320 |
| 38 | c * | 1150 | 240 | 922 | 50 | 550 | 500 | 52 | 910 | 120 | 10 | 250 | 20 | 620 | 580 | 10 | 370 | 320 |
| 39 | d * | 1150 | 240 | 970 | 50 | 550 | 500 | 25 | 910 | 120 | 10 | 170 | 20 | 575 | 1100 | 10 | 270 | 180 |
| 40 | A | 1150 | 240 | 900 | 50 | 560 | 500 | 60 | 900 | 120 | 10 | 200 | 20 | 580 | 700 | 10 | 290 | 180 |
| 41 | A | 1150 | 240 | 900 | 50 | 560 | 500 | 60 | 930 | 120 | 10 | 200 | 20 | 580 | 750 | 10 | 250 | 180 |
| 42 | A | 1150 | 240 | 900 | 50 | 550 | 500 | 60 | 920 | 120 | 10 | 200 | 20 | 580 | 730 | 10 | 130 | 320 |
| 43 | A | 1150 | 240 | 900 | 50 | 550 | 500 | 60 | 930 | 120 | 10 | 200 | 20 | 580 | 900 | 10 | not performed | |
| 44 | A | 1150 | 240 | 900 | 50 | 560 | 500 | 60 | 940 | 120 | 10 | 200 | 20 | 600 | 580 | 10 | 370 | 320 |
| 45 | A | 1150 | 240 | 910 | 50 | 560 | 500 | 60 | 900 | 120 | 10 | 20 | 20 | 580 | 700 | 10 | 370 | 320 |
| 46 | A | 1150 | 240 | 900 | 50 | 550 | 500 | 60 | 860 | 120 | 10 | 200 | 3 | 600 | 500 | 10 | 370 | 320 |
| 47 | A | 1150 | 240 | 900 | 50 | 550 | 500 | 60 | 910 | 120 | 10 | 200 | 20 | 600 | 580 | 10 | 370 | 7200 |
| 48 | A | 1150 | 240 | 900 | 50 | 560 | 500 | 60 | 970 | 120 | 10 | 150 | 20 | 600 | 580 | 10 | 370 | 320 |
| 49 | A | 1150 | 240 | 900 | 50 | 550 | 500 | 60 | 970 | 120 | 10 | 160 | 20 | 600 | 580 | 10 | 370 | 320 |
| 50 | A | 1150 | 240 | 900 | 50 | 560 | 500 | 60 | 970 | 120 | 10 | 250 | 20 | 600 | 580 | 10 | 370 | 320 |
| 51 | A | 1150 | 240 | 900 | 50 | 560 | 500 | 52 | 970 | 120 | 10 | 280 | 20 | 600 | 150 | 10 | 370 | 320 |
| 52 | E | 1150 | 240 | 950 | 50 | 560 | 500 | 52 | 930 | 120 | 10 | 170 | 20 | 560 | 1200 | 10 | 350 | 300 |
| 53 | E | 1150 | 240 | 950 | 50 | 560 | 500 | 52 | 930 | 120 | 10 | 190 | 20 | 600 | 1800 | 10 | 350 | 300 |
| 54 | E | 1150 | 240 | 950 | 50 | 550 | 500 | 52 | 930 | 120 | 10 | 150 | 20 | 560 | 800 | 10 | 350 | 300 |
| 55 | E | 1150 | 240 | 950 | 50 | 550 | 500 | 52 | 930 | 120 | 10 | 100 | 20 | 550 | 3600 | 10 | 350 | 300 |
| 56 | A | 1150 | 240 | 900 | 50 | 560 | 500 | 60 | 860 | 120 | 10 | 200 | 13 | 600 | 580 | 10 | 370 | 320 |
| 57 | A | 1150 | 240 | 900 | 50 | 550 | 500 | 60 | 910 | 120 | 10 | 200 | 13 | 600 | 580 | 2 | 360 | 320 |
| 58 | A | 1150 | 240 | 900 | 50 | 560 | 500 | 60 | 910 | 120 | 10 | 200 | 13 | 600 | 580 | 10 | 460 | 60 |
| 59 | A | 1150 | 240 | 900 | 50 | 560 | 500 | 60 | 910 | 120 | 10 | 200 | 13 | 600 | 580 | 10 | 480 | 120 |

* indicates that conditions do not satisfy those defined by the present invention.

From the obtained cold-rolled steel sheets, test materials were extracted, and the test materials were heated to maximum annealing temperatures shown in Tables 2 and 3, subjected to annealing in which the test materials were retained for durations shown in Tables 2 and 3 (the first annealing process), and then cooled to cooling stop temperatures at average cooling rates shown in Tables 2 and 3 (the second cooling process).

The second annealing process subsequent to the second cooling process was performed by heating the test materials to maximum annealing temperatures shown in Tables 2 and 3 at average heating rates shown in Tables 2 and 3 and retaining the test materials for annealing durations shown in Tables 2 and 3. Next, the test materials were cooled to room temperature at average cooling rates shown in Tables 2 and 3 (the third cooling process).

In the tempering process, the test materials were heated at an average heating rate of 5°C/s to temperatures shown in Tables 2 and 3 and retained for durations shown in Tables 2 and 3. Subsequently, the test materials were cooled at 10°C/s to room temperature (the fourth cooling process).

In Test Nos. 57 to 59, surfaces of their test materials were subjected to plating treatment. In Test No. 57, after the tempering process was finished, Zn-Ni was adhered to its test material by the electrolytic plating. In Test No. 58, after the third cooling process, its steel was immersed in a bath of melted Zn heated to 460°C to be produced into a galvanized steel sheet. The melted zinc contains about 0.01% of Al as in conventional practices. With the temperature of the plating bath, the plating treatment is regarded as a substitute for the tempering process. In Test No. 59, as in Test No. 58, after the third cooling process, its steel was immersed in a galvanizing bath and subsequently, further reheated and retained, by which Zn and Fe in a base metal were alloyed. A timing for performing the plating is not limited to the above timing. For example, the immersion in the plating bath or the plating may be performed in the third cooling process.

The steel sheets produced by the procedure described above were subjected to identification of steel micro-structure by the following method. A method for determining an area fraction of each of kinds of steel micro-structure will be described below.

First, a sample including a cross section that was cut in such a manner as to be perpendicular to a rolling direction and was subjected to mirror polishing and then electrolytic grinding was prepared, and then regions that were 100 $\mu$m × 100 $\mu$m or more in area, and were spaced from each other by 0.1 $\mu$m, were measured using a SEM-EBSD. Subsequently, analysis software from TSL Solutions Ltd. was used to calculate an average value of in-grain image qualities of grains (Grain Average Image Quality: GAIQ value). Then, the area fraction of the region at the 1/4 sheet-thickness position determined as FCC was determined to be the area fraction of the residual $\gamma$.

Next, the method described in F. S. Lepera: Journal of Metals 32, No. 3, (1980) 38-39 was used to etch the cross section in the rolling direction, so as to expose fresh martensite and residual $\gamma$. Subsequently, observation was performed at the 1/4 sheet-thickness position under an optical microscope at 1000x magnification, and a steel micro-structure photograph was subjected to image processing, so as to measure a total area fraction (%) of the fresh martensite and the retained austenite. As an etching reagent, one made by mixing a solution of 4% $Na_2S_2O_5$ dissolved in distilled water and a solution of 4% $[C_6H_2(NO)_3OH]$ dissolved in ethanol at 1:1 was used.

Then, the area fraction of the fresh martensite was determined by subtracting the retained austenite measured by the method described above from the value of the total area fraction of the fresh martensite and the retained austenite.

Then, the fraction of grains having GAIQ values of 5000 or less (at the 1/4 sheet-thickness position) was determined as the total area fraction of the low temperature tempered martensite and the fresh martensite. The area fraction of the low temperature tempered martensite was determined by subtracting the area fraction of the fresh martensite from this value.

A cross section perpendicular to the rolling direction is cut, subjected to mirror polishing, then etched using Nital, and subjected to SEM observation at the 1/4 sheet-thickness position. The SEM observation was performed at 5000x magnification, and as a measurement region, four or more fields of view each of which is a 25 $\mu$m × 20 $\mu$m region were set. After the Nital etching, the sample was observed under a SEM, and steel micro-structures that had no substructure and were hollowed out were determined to be ferrite or high temperature tempered martensite. Out of these steel micro-structures, a fraction of steel micro-structures whose major axes and minor axes made ratios of two or more was determined to be the area fraction of the high temperature tempered martensite, and a fraction of steel micro-structures that made the ratios less than two was determined to be an area fraction of the ferrite. The major axes and the minor axes were determined as follows. First, one of grains is focused in photographs captured in the above observation, and out of lines each connecting a grain boundary and another grain boundary, a longest line is determined to be the major axis. Then, out of lines each connecting the grain boundary and another grain boundary and dividing the major axis, a shortest line was determined to be the minor axis.

For the pearlite, after Nital etching was performed, four or more fields of view each of which was a 25 $\mu$m × 20 $\mu$m region at the 1/4 sheet-thickness position were observed under a SEM, and a fraction of steel micro-structures in which a lamellar steel micro-structure could be seen was determined to be an area fraction of the pearlite. For the bainite, similarly, after Nital etching was performed, four or more fields of view each of which was a 25 $\mu$m × 20 $\mu$m region at the 1/4 sheet-thickness position were observed under a SEM, and steel micro-structures whose major axes and minor axes made ratios of two or more and in which cementite was recognized under a 5000x SEM was determined to be the bainite.

Results of measuring the area fractions of the kinds of steel-micro structure are shown in Tables 4 and 5.

[Table 4]

[Table 4]

Table 4

| Test No. | Steel | Steel Micro-Structure (area %) | | | | | | |
|----------|-------|---------|-----------------------------------|----------|---------|------------------------------------|------------------|-----------|
| | | Ferrite | High temperature tempered martensite | Pearlite | Bainite | Low temperature tempered martensite | Fresh martensite | Retained γ |
| 1 | A | 0 | 38.7 | 0 | 0 | 40.2 | 0 | 21.1 |
| 2 | A | 0 | 38.6 | 0 | 0 | 38.2 | 0 | 23.2 |
| 3 | A | 0 | 40.8 | 0 | 0 | 38.8 | 0 | 20.4 |
| 4 | A | 0 | 42.0 | 0 | 0 | 37.7 | 0 | 20.3 |
| 5 | A | 0 | 36.5 | 0 | 0 | 43.9 | 0 | 19.6 |
| 6 | A | 0 | 60.4 | 0 | 0 | 8.5 * | 0 | 31.1 |
| 7 | A | 0 | 57.8 | 0 | 0 | 9.8 * | 0 | 32.4 |
| 8 | A | 0 | 35.7 | 0 | 0 | 40.1 | 0 | 24.2 |
| 9 | A | 0 | 66.9 | 0 | 0 | 2.0 * | 0 | 31.1 |
| 10 | A | 5.9 * | 1.5 * | 0 | 0 | 88.8 * | 0 | 3.8 * |
| 11 | A | 0 | 0.1 * | 0 | 0 | 96.2 * | 0 | 3.7 * |
| 12 | A | 0 | 54.3 | 7.2 * | 0 | 30.6 | 0 | 7.9 * |
| 13 | A | 0 | 60.6 | 0 | 0 | 31.2 | 0 | 8.2 * |
| 14 | A | 0 | 38.5 | 0 | 0 | 22.5 | 19.8 * | 19.2 |
| 15 | A | 0 | 56.1 | 8.2 * | 0 | 19.9 | 7.0 | 8.8 * |
| 16 | B | 0 | 40.3 | 0 | 0 | 35.5 | 0 | 24.2 |
| 17 | C | 0 | 45.9 | 0 | 0 | 39.0 | 0 | 15.1 |
| 18 | D | 0 | 46.6 | 0 | 0 | 37.2 | 0 | 16.2 |
| 19 | E | 0 | 31.2 | 0 | 0 | 37.6 | 0 | 31.2 |
| 20 | F | 0 | 38.8 | 0 | 0 | 41.7 | 0 | 19.5 |
| 21 | G | 0 | 41.2 | 0 | 0 | 38.7 | 0 | 20.1 |
| 22 | H | 0 | 40.9 | 0 | 0 | 39.1 | 0 | 20.0 |

(continued)

| Test No. | Steel | Ferrite | High temperature tempered martensite | Pearlite | Bainite | Low temperature tempered martensite | Fresh martensite | Retained $\gamma$ |
|---|---|---|---|---|---|---|---|---|
| | | | | | | Steel Micro-Structure (area %) | | |
| 23 | I | 0 | 38.4 | 0 | 0 | 36.8 | 0 | 24.8 |
| 24 | J | 0 | 37.6 | 0 | 0 | 41.2 | 0 | 21.2 |
| 25 | K | 0 | 41.5 | 0 | 0 | 38.2 | 0 | 20.3 |
| 26 | L | 0 | 38.5 | 0 | 0 | 37.7 | 0 | 23.8 |
| 27 | M | 0 | 43.2 | 0 | 0 | 41.8 | 0 | 15.0 |
| 28 | N | 0 | 45.2 | 0 | 0 | 40.0 | 0 | 14.8 |
| 29 | O | 0 | 30.8 | 0 | 0 | 38.2 | 0 | 31.0 |
| 30 | P | 0 | 37.8 | 0 | 0 | 42.9 | 0 | 19.3 |

* indicates that conditions do not satisfy those defined by the present invention.

[Table 5]

Table 5

| Test No. | Steel | Steel Micro-Structure (area %) | | | | | | |
|---|---|---|---|---|---|---|---|---|
| | | Ferrite | High temperature tempered martensite | Pearlite | Bainite | Low temperature tempered martensite | Fresh martensite | Retained γ |
| 31 | Q | 0 | 39.8 | 0 | 0 | 36.9 | 0 | 23.3 |
| 32 | R | 0 | 44.5 | 0 | 0 | 40.7 | 0 | 14.8 |
| 33 | S | 0 | 45.3 | 0 | 0 | 38.9 | 0 | 15.8 |
| 34 | T | 0 | 30.7 | 0 | 0 | 38.8 | 0 | 30.5 |
| 35 | U | 0 | 37.5 | 0 | 0 | 39.6 | 0 | 22.9 |
| 36 | a * | 0 | 54.3 | 0 | 0 | 45.2 | 0 | 0.5 * |
| 37 | b * | 0 | 19.1 * | 16.2 * | 0 | 28.5 | 0 | 36.2 |
| 38 | c * | 0 | 55.7 | 0 | 0 | 40.8 | 0 | 3.5 * |
| 39 | d * | 0 | 8.9 * | 0 | 0 | 0 * | 0 | 91.1 * |
| 40 | A | 0 | 46.5 | 0 | 0 | 32.3 | 5.2 | 16.1 |
| 41 | A | 0 | 47.2 | 0 | 0 | 33.7 | 3.3 | 15.8 |
| 42 | A | 0 | 46.8 | 0 | 0 | 29.6 | 7.6 | 16.0 |
| 43 | A | 0 | 48.8 | 0 | 0 | 23.6 | 12.2 * | 15.4 |
| 44 | A | 0 | 38.6 | 0 | 0 | 4.9 * | 38.1 * | 18.4 |
| 45 | A | 0 | 78.8 | 0 | 0 | 3.2 * | 0 | 21.2 |
| 46 | A | 0 | 39.0 | 0 | 0 | 58.3 | 0 | 2.7 * |
| 47 | A | 0 | 43.8 | 0 | 0 | 50.0 | 0 | 6.2 * |
| 48 | A | 0 | 57.8 | 0 | 0 | 16.2 | 0 | 26.0 |
| 49 | A | 0 | 49.5 | 0 | 0 | 28.3 | 0 | 22.2 |
| 50 | A | 0 | 31.8 | 0 | 0 | 55.8 | 0 | 12.4 |
| 51 | A | 0 | 23.8 * | 0 | 0 | 68.3 * | 0 | 7.9 * |
| 52 | E | 0 | 31.6 | 0 | 0 | 25.2 | 0 | 43.2 |
| 53 | E | 0 | 33.8 | 0 | 0 | 38.2 | 0 | 28.0 |
| 54 | E | 0 | 31.0 | 0 | 0 | 18.9 | 0 | 50.1 |
| 55 | E | 0 | 27.1 * | 0 | 0 | 14.2 * | 0 | 58.7 * |
| 56 | A | 7.2 * | 37.5 | 0 | 2 | 36.5 | 0 | 16.8 |
| 57 | A | 0 | 35.0 | 0 | 0 | 43.5 | 0 | 21.5 |
| 58 | A | 0 | 38.8 | 0 | 0 | 37.0 | 0 | 24.2 |
| 59 | A | 0 | 43.2 | 0 | 0 | 35.0 | 0 | 21.8 |
| * indicates that conditions do not satisfy those defined by the present invention. | | | | | | | | |

Mechanical properties of the obtained steel sheets were measured. From each of the test materials subjected to the heat treatment, a No. 5 tensile test specimen according to JIS was taken in such a manner that a direction perpendicular to its rolling direction is a tensile direction, and yield strength (YS), tensile strength (TS), uniform elongation (uEL), and total elongation (EL) were measured. A difference between the total elongation and the uniform elongation was defined as the local elongation (lEL). The measured mechanical properties are shown in Tables 6 and 7.

[Table 6]

Table 6

| Test No. | Steel | Mechanical Property | | | | | | | | | | |
|---|---|---|---|---|---|---|---|---|---|---|---|---|
| | | YS (MPa) | TS (MPa) | uEL (%) | tEL (%) | IEL (%) | TS×uEL (MPa%) | TS×tEL (MPa%) | TS×IEL (MPa%) | YS×uEL (MP%) | YR | |
| 1 | A | 1039 | 1446 | 15.3 | 21.2 | 5.9 | 22124 | 30655 | 8531 | 15897 | 0.72 | Inventive example |
| 2 | A | 1035 | 1449 | 14.9 | 21.8 | 6.9 | 1464 | 31588 | 9998 | 15422 | 0.71 | |
| 3 | A | 1008 | 1421 | 14.6 | 21.2 | 6.6 | 20747 | 30125 | 9379 | 14717 | 0.71 | |
| 4 | A | 1021 | 1433 | 14.8 | 21.7 | 6.9 | 21208 | 31096 | 9888 | 15111 | 0.71 | |
| 5 | A | 1021 | 1417 | 14.3 | 21.0 | 6.7 | 20263 | 29757 | 9494 | 14600 | 0.72 | |
| 6 | A * | 572 | 1148 | 16.1 | 24.5 | 8.4 | 18483 | 28126 | 9643 | 9209 | 0.67 | Comparative example |
| 7 | A * | 650 | 1158 | 14.7 | 23.9 | 9.2 | 17023 | 27676 | 10654 | 9555 | 0.68 | |
| 8 | A | 1037 | 1444 | 14.8 | 20.2 | 5.4 | 21371 | 29169 | 7798 | 15348 | 0.72 | Inv. Ex. |
| 9 | A * | 561 | 1021 | 17.2 | 33.3 | 16.1 | 17561 | 33999 | 16438 | 9649 | 0.65 | Comparative example |
| 10 | A * | 1097 | 1466 | 6.2 | 7.1 | 0.9 | 9089 | 10409 | 1319 | 6801 | 0.75 | |
| 11 | A * | 1162 | 1292 | 7.2 | 9.2 | 2.0 | 9302 | 11886 | 2584 | 8366 | 0.90 | |
| 12 | A * | 999 | 1280 | 7.8 | 12.2 | 4.4 | 9984 | 15616 | 5632 | 7792 | 0.78 | |
| 13 | A * | 1111 | 1489 | 8.1 | 10.0 | 1.9 | 12061 | 14890 | 2829 | 8189 | 0.75 | |
| 14 | A * | 872 | 1499 | 9.5 | 10.2 | 0.7 | 14241 | 22785 | 1049 | 8284 | 0.58 | |
| 15 | A * | 924 | 1169 | 15.2 | 17.2 | 2.0 | 17769 | 20107 | 2338 | 14045 | 0.79 | |

(continued)

| Test No. | Steel | Mechanical Property | | | | | | | | | | |
|---|---|---|---|---|---|---|---|---|---|---|---|---|
| | | YS (MPa) | TS (MPa) | uEL (%) | tEL (%) | lEL (%) | TS×uEL (MPa%) | TS×tEL (MPa%) | TS×lEL (MPa%) | YS×uEL (MP%) | YR | |
| 16 | B | 1131 | 1547 | 17.2 | 23.2 | 6.0 | 26608 | 35890 | 9282 | 19453 | 0.73 | |
| 17 | C | 1093 | 1499 | 21.9 | 27.3 | 5.4 | 32828 | 40923 | 8095 | 23937 | 0.73 | |
| 18 | D | 1074 | 1464 | 12.8 | 20.1 | 7.3 | 18739 | 29426 | 10687 | 13747 | 0.73 | |
| 19 | E | 1038 | 1467 | 22.2 | 27.6 | 5.4 | 32567 | 40489 | 7922 | 23044 | 0.71 | |
| 20 | F | 1100 | 1477 | 12.9 | 21.3 | 8.4 | 19053 | 31460 | 12407 | 14190 | 0.74 | |
| 21 | G | 1173 | 1491 | 15.1 | 22.4 | 7.3 | 22514 | 33398 | 10884 | 17712 | 0.79 | |
| 22 | H | 1162 | 1481 | 15.3 | 22.4 | 7.1 | 22659 | 33174 | 10515 | 17779 | 0.78 | |
| 23 | I | 1087 | 1487 | 16.5 | 22.1 | 5.6 | 24536 | 32863 | 8327 | 17936 | 0.73 | Inventive example |
| 24 | J | 1111 | 1476 | 15.2 | 21.7 | 6.5 | 22435 | 32029 | 9594 | 16887 | 0.75 | |
| 25 | K | 1132 | 1487 | 15.3 | 24.3 | 9.0 | 22751 | 36134 | 13383 | 17320 | 0.76 | |
| 26 | L | 1142 | 1558 | 17.0 | 22.5 | 5.5 | 26486 | 35055 | 8569 | 19414 | 0.73 | |
| 27 | M | 1103 | 1532 | 20.6 | 25.8 | 5.2 | 31559 | 39526 | 7966 | 22722 | 0.72 | |
| 28 | N | 1132 | 1553 | 11.8 | 17.2 | 5.4 | 18325 | 26712 | 8386 | 13358 | 0.73 | |
| 29 | O | 1042 | 1471 | 22.2 | 28.2 | 6.0 | 32656 | 41482 | 8826 | 23132 | 0.71 | |
| 30 | P | 1105 | 1479 | 12.8 | 22.3 | 9.5 | 18931 | 32982 | 14051 | 14144 | 0.75 | |

* indicates that conditions do not satisfy those defined by the present invention.

[Table 7]

Table 7

| Test No. | Steel | Mechanical Property | | | | | | | | | | |
|---|---|---|---|---|---|---|---|---|---|---|---|---|
| | | YS (MPa) | TS (MPa) | uEL (%) | tEL (%) | lEL (%) | TS×uEL (MPa%) | TS×tEL (MPa%) | TS×lEL (MPa%) | YS×uEL (MP%) | YR | |
| 31 | Q | 1135 | 1551 | 17.0 | 24.2 | 7.2 | 26367 | 37534 | 11167 | 19295 | 0.73 | Inventive example |
| 32 | R | 1103 | 1503 | 21.3 | 26.9 | 5.6 | 32014 | 40431 | 8417 | 23494 | 0.73 | |
| 33 | S | 1079 | 1512 | 12.7 | 19.8 | 7.1 | 19202 | 29938 | 10735 | 13703 | 0.71 | |
| 34 | T | 1055 | 1490 | 21.9 | 27.9 | 6.0 | 32631 | 41571 | 8940 | 23105 | 0.71 | |
| 35 | U | 1250 | 1482 | 14.9 | 22.3 | 7.4 | 22082 | 33049 | 10967 | 18625 | 0.84 | |
| 36 | a * | 789 | 999 | 11.9 | 19.5 | 7.6 | 11890 | 19484 | 7594 | 9389 | 0.79 | Comparative example |
| 37 | b * | 890 | 1158 | 6.5 | 6.5 | 0.0 | 7527 | 7527 | 0 | 5785 | 0.77 | |
| 38 | c * | 1035 | 1376 | 7.8 | 12.9 | 5.1 | 10733 | 17750 | 7018 | 8073 | 0.75 | |
| 39 | d * | 548 | 970 | 31.5 | 38.9 | 7.4 | 30555 | 37733 | 7178 | 17262 | 0.56 | |
| 40 | A | 1011 | 1433 | 10.3 | 15.7 | 5.4 | 14760 | 22448 | 7688 | 10413 | 0.71 | Inventive example |
| 41 | A | 1018 | 1432 | 10.2 | 15.8 | 5.6 | 14606 | 22586 | 7980 | 10384 | 0.71 | |
| 42 | A | 1004 | 1434 | 10.3 | 15.3 | 5.0 | 14770 | 22000 | 7230 | 10341 | 0.70 | |
| 43 | A * | 903 | 1423 | 8.3 | 9.9 | 1.6 | 11811 | 14031 | 2220 | 7495 | 0.63 | Comparative example |
| 44 | A * | 931 | 1654 | 9.3 | 9.3 | 0.0 | 15382 | 15382 | 0 | 8658 | 0.56 | |
| 45 | A * | 580 | 953 | 16.4 | 25.1 | 8.7 | 15629 | 23920 | 8291 | 9512 | 0.61 | |
| 46 | A * | 1110 | 1480 | 7.8 | 9.8 | 2.0 | 11533 | 14513 | 2980 | 8650 | 0.75 | |
| 47 | A * | 1070 | 1466 | 8.5 | 11.1 | 2.6 | 12534 | 16290 | 3756 | 9150 | 0.73 | |
| 48 | A | 907 | 1260 | 13.2 | 22.6 | 9.4 | 16639 | 11900 | 11900 | 11980 | 0.72 | Inventive example |
| 49 | A | 994 | 1380 | 14.4 | 22.4 | 8.0 | 19861 | 11060 | 11060 | 14300 | 0.72 | |
| 50 | A | 1074 | 1432 | 10.7 | 16.0 | 5.3 | 15333 | 7620 | 7620 | 11500 | 0.75 | |
| 51 | A * | 1080 | 1350 | 8.7 | 12.8 | 4.1 | 11695 | 17275 | 5580 | 9356 | 0.80 | Comp. ex. |

EP 3 550 047 A1

26

(continued)

| Test No. | Steel | Mechanical Property | | | | | | | | | | |
|---|---|---|---|---|---|---|---|---|---|---|---|---|
| | | YS (MPa) | TS (MPa) | uEL (%) | tEL (%) | lEL (%) | TS×uEL (MPa%) | TS×tEL (MPa%) | TS×lEL (MPa%) | YS×uEL (MP%) | YR | |
| 52 | E | 1136 | 1600 | 14.9. | 22.6 | 7.7 | 23831 | 36131 | 12300 | 16920 | 0.71 | Inventive example |
| 53 | E | 1191 | 1632 | 16.6 | 25.1 | 8.5 | 27151 | 40971 | 13820 | 19820 | 0.73 | |
| 54 | E | 1123 | 1560 | 11.0 | 16.4 | 5.3 | 17194 | 25514 | 8320 | 12380 | 0.72 | |
| 55 | E * | 949 | 1530 | 9.8 | 12.3 | 2.5 | 15040 | 18860 | 3820 | 9325 | 0.62 | Comparative example |
| 56 | A * | 888 | 1410 | 10.6 | 15.7 | 5.1 | 14968 | 22118 | 7150 | 9430 | 0.63 | |
| 57 | A | 1048 | 1443 | 11.5 | 21.3 | 9.8 | 1455 | 30736 | 14141 | 12052 | 0.73 | Inventive example |
| 58 | A | 1024 | 1438 | 15.5 | 23.2 | 7.7 | 1454 | 33362 | 11073 | 15872 | 0.71 | |
| 59 | A | 1018 | 1430 | 12.5 | 22.3 | 9.8 | 1443 | 31889 | 14014 | 12725 | 0.71 | |

* indicates that conditions do not satisfy those defined by the present invention.

In Test Nos. 1 to 5, 8, 16 to 35, 40 to 42, 48 to 50, 52 to 54, and 57 to 59, which satisfy all definitions of the present invention, TS were 1180 MPa or more, TS × IEL were 6000 MPa% or more, and YS × uEL were 10000 MPa% or more; the results show high strengths and excellent formabilities.

In contrast, in Test No. 6, since its annealing temperature of the first annealing process was low, less low temperature tempered martensite was obtained, its strength was low, and its TS × IEL was also low. In Test No. 7, since its annealing duration of the annealing process was short, less low temperature tempered martensite was obtained, its strength was low, and its TS × IEL was also low, as in Test No. 6.

In test No. 9, its stop temperature of the second cooling process was 20°C, which was low. The second annealing process was performed after the cooling, and this was under the same heat treatment condition as that of a conventional method described in Non-Patent Document 1 and the like. In Test No. 9, the low temperature tempered martensite was 2.0%, which was lower than the range of the present invention, and TS was therefore low. This holds true for Test No. 45.

In test No. 10, its cooling stop temperature of the second cooling process was 400°C, which was high. As a result, the transformation did not occur, and its steel micro-structure was austenite. The heating performed thereafter produced a slight amount of ferrite, but the amount was small, and therefore C and Mn were not concentrated in the austenite. Through the third cooling process and the tempering process, low temperature tempered martensite is produced in a large amount, which made its steel micro-structure include less residual γ. This made YS × uEL and TS × tEL low. This holds true for Test No. 51.

In Test No. 11, its maximum annealing temperature of the second annealing process was 730°C, which was high, which transforms its steel micro-structure into an austenite single phase, C and Mn is not concentrated in its austenite, making the steel micro-structure unstable. Therefore, a large amount of tempered martensite was produced through the third cooling process and the tempering process, which reduced the area fraction of the residual γ. As a result, TS × IEL and YS × uEL were low.

In Test No. 12, the maximum heating temperature of the second annealing process was 530°C, which was low, causing precipitation of cementite and pearlite transformation, which significantly reduced the area fraction of the residual γ. As a result, TS × IEL and YS × uEL were low.

In Test No. 13, its annealing duration of the second annealing process was 60 seconds, which was short and did not allow C and Mn to be concentrated in its austenite, making the steel micro-structure unstable and reducing the area fraction of the residual γ. As a result, TS × IEL and YS × uEL were low.

In Test No. 14, its temperature of the tempering process was 130°C, which was low, and tempering of the martensite produced in the third cooling process did not proceed, which left the fresh martensite in a large amount in its steel micro-structure. As a result, YS and YS × uEL were low. This holds true for Test Nos. 43 and 44.

In Test No. 15, its temperature of the tempering process was 600°C, which was higher than the range according to the present invention, causing cementite to precipitate to reduce the area fraction of the residual γ and producing pearlite to reduce the area fraction of the low temperature tempered martensite. As a result, YS, TS, and TS × IEL were low.

In Test No. 46, its average heating rate of the second annealing process was 3°C/s, which was low, reducing the area fraction of the residual γ. As a result, TS × IEL and YS × uEL were low.

In Test No. 47, its retention duration of the tempering process was long, reducing the area fraction of the residual γ. As a result, TS × IEL and YS × uEL were low.

In test No. 55, its treatment conditions for the second cooling process were inappropriate, and therefore the area fractions of the high temperature tempered martensite and the low temperature tempered martensite were reduced. As a result, TS × IEL and YS × uEL were low.

In Test No. 56, its average cooling rate of the third cooling process was 2°C/s, which was low, causing ferrite to precipitate, and therefore YR and YS × uEL decreased.

In Test No. 36, its content of C was lower than the range according to the present invention, which made the area fraction of the residual γ fall out of the range according to the present invention. As a result, its uniform elongation was low, and YS × uEL decreased. Its strength also decreased, and it is inferred that the decrease was due to softening of the tempered martensite caused by the decrease in its content of C.

In Test No. 37, its content of C was higher than the range according to the present invention, resulting in a steel micro-structure in which the pearlite was present in a large amount, and a large amount of cementite was observed. As a result, its local ductility significantly decreased, and TS × IEL was low. In addition, its test specimen ruptured in an early stage, and therefore its uniform elongation was low, and YS × uEL was also low.

In Test No. 38, its content of Mn was lower than the range according to the present invention, which made the area fraction of the residual γ fall out of the range according to the present invention. Its uniform elongation therefore decreased, and YS × uEL decreased. In Test No. 39, its content of Mn was higher than the range according to the present invention, which stabilized the austenite excessively and failed to obtain a sufficient amount of the tempered martensite, and therefore YS and TS decreased.

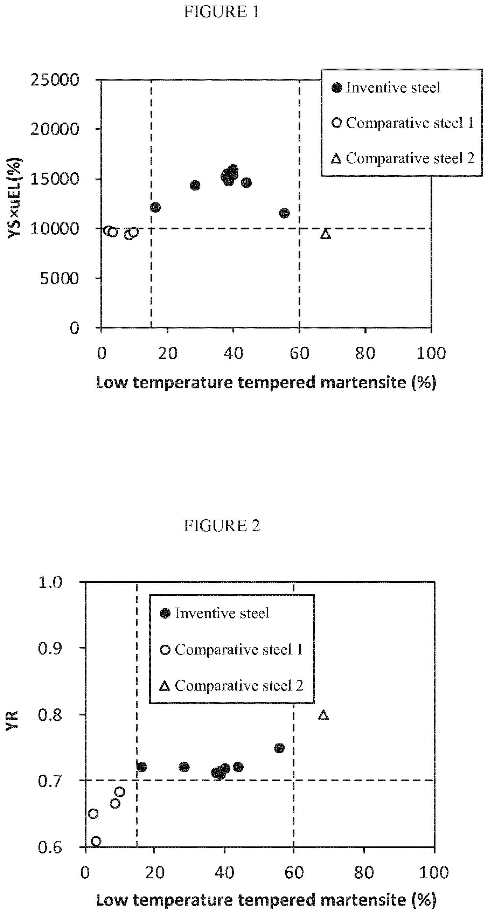

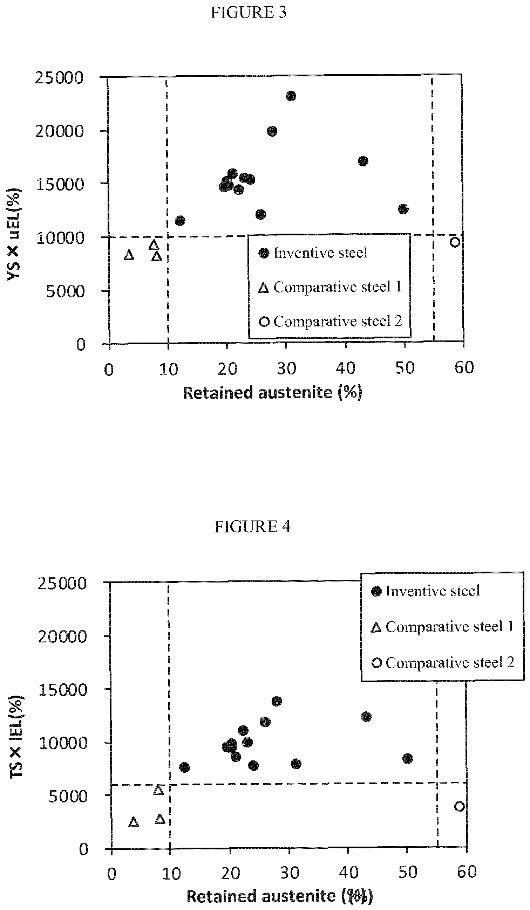

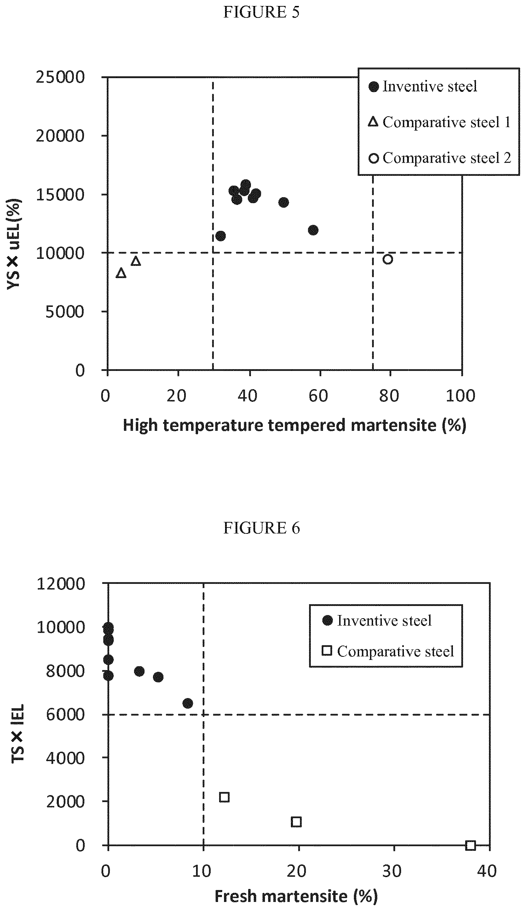

Figures 1 to 6 are graphs for understanding a relation between steel micro-structure and mechanical properties from which influences of alloying components are eliminated and each of which plots the relation between steel micro-structure and mechanical properties for a steel type A and a steel type E, which were produced under a plurality of production conditions in Example. As seen from Figures 1 to 6, excellent mechanical properties are obtained by controlling the area fraction of the low temperature tempered martensite to 15.0 to 60.0%, the area fraction of the retained austenite to 10.0 to 55.0%, the area fraction of the high temperature tempered martensite to 30.0 to 75.0%, and the area fraction of the fresh martensite to 0 to 10.0%.

INDUSTRIAL APPLICABILITY

According to the present invention, it is possible to obtain a high-strength steel sheet having a high uniform elongation and a high local elongation while having a tensile strength as high as 1180 MPa or more.

**Claims**

1.  A high-strength steel sheet having a chemical composition consisting of, in mass percent:

    C: 0.10 to 0.24%;
    Mn: 3.50 to 12.00%;
    Si: 0.005 to 5.00%;
    Al: 0.005 to 5.00%;
    P: 0.15% or less;
    S: 0.030% or less;
    N: 0.020% or less;
    O: 0.010% or less;
    Cr: 0 to 5.00%;
    Mo: 0 to 5.00%;
    Ni: 0 to 5.00%;
    Cu: 0 to 5.00%;
    Nb: 0 to 0.50%;
    Ti: 0 to 0.50%;
    W: 0 to 0.50%;
    B: 0 to 0.010%;
    Ca: 0 to 0.05%;
    Mg: 0 to 0.05%;
    Zr: 0 to 0.05%;
    REM: 0 to 0.05%;
    Sb: 0 to 0.50%;
    Sn: 0 to 0.50%;
    As: 0 to 0.05%; and
    V: 0 to 2.0%;
    with the balance: Fe and impurities, wherein
    a steel micro-structure at a 1/4 sheet-thickness position includes, in area percent:

       retained austenite: 10.0 to 55.0%;
       high temperature tempered martensite: 30.0 to 75.0%; and
       low temperature tempered martensite: 15.0 to 60.0%;

    with the balance including:

       fresh martensite: 0 to 10.0%;
       pearlite: 0 to 5.0%; and
       bainite: 0 to 5.0%.

2.  The high-strength steel sheet according to claim 1, wherein, in the steel micro-structure, a total of area fractions of the fresh martensite, the pearlite, and the bainite is, in area percent, 0 to 5.0%.

3.  The high-strength steel sheet according to claim 1 or claim 2, wherein, in the steel micro-structure, area fractions of the pearlite and the bainite are 0%.

4. The high-strength steel sheet according to any one of claim 1 to claim 3, wherein the steel sheet has a tensile strength of 1180 MPa or more and a sheet thickness of 0.8 to 3.2 mm.

5. The high-strength steel sheet according to any one of claim 1 to claim 4, wherein the chemical composition contains, in mass percent, C: 0.13 to 0.21%.

6. The high-strength steel sheet according to any one of claim 1 to claim 5, wherein the chemical composition contains, in mass percent, Mn: 4.0 to 7.0%.

7. The high-strength steel sheet according to any one of claim 1 to claim 6, wherein the chemical composition contains, in mass percent, Cr: 0 to 1.50%.

8. The high-strength steel sheet according to any one of claim 1 to claim 7, wherein the chemical composition contains, in mass percent, Mo: 0 to 1.00%.

9. The high-strength steel sheet according to any one of claim 1 to claim 8, wherein the chemical composition contains, in mass percent, Ni: 0 to 1.50%.

10. The high-strength steel sheet according to any one of claim 1 to claim 9, wherein the chemical composition contains, in mass percent, Cu: 0 to 1.50%.

11. The high-strength steel sheet according to any one of claim 1 to claim 10, wherein the chemical composition contains, in mass percent, B: 0 to 0.003%.

12. The high-strength steel sheet according to any one of claim 1 to claim 11, wherein a surface of the steel sheet includes a galvanized layer, a galvannealed layer, or a Zn-Ni alloy plating layer.

FIGURE 1

FIGURE 2

FIGURE 3

FIGURE 4

FIGURE 5

FIGURE 6

## INTERNATIONAL SEARCH REPORT

| International application No. |
|---|
| PCT/JP2016/086060 |

| A. CLASSIFICATION OF SUBJECT MATTER |
|---|
| $C22C38/00(2006.01)i$, $C22C38/60(2006.01)i$, $C21D9/46(2006.01)n$ |

According to International Patent Classification (IPC) or to both national classification and IPC

| B. FIELDS SEARCHED |
|---|

Minimum documentation searched (classification system followed by classification symbols)
C22C38/00-38/60, C21D9/46

Documentation searched other than minimum documentation to the extent that such documents are included in the fields searched

| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2016/158159 A1 (Kobe Steel, Ltd.),<br>06 October 2016 (06.10.2016),<br>& JP 2016-194138 A | 1-12 |
| A | WO 2013/061545 A1 (JFE Steel Corp.),<br>02 May 2013 (02.05.2013),<br>& US 2014/0360632 A1 & EP 2772556 A1<br>& CN 103890202 A & KR 10-2014-0075789 A<br>& TW 201317369 A1 | 1-12 |
| E,A | WO 2016/199922 A1 (Nippon Steel & Sumitomo<br>Metal Corp.),<br>15 December 2016 (15.12.2016),<br>(Family: none) | 1-12 |

| ☐ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 23 February 2017 (23.02.17) | 07 March 2017 (07.03.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61217529 A
- JP 5059429 A
- JP 2005330584 A
- JP 2011241474 A
- JP 2012237054 A
- JP 2016067448 W

**Non-patent literature cited in the description**

- **TAKASHI FURUKAWA ; OSAMU MATSUMURA.** *Journal of the Japan Society for Heat Treatment,* 1997, vol. 37 (4), 204
- **F. S. LEPERA.** *Journal of Metals,* 1980, vol. 32 (3), 38-39